# EUROPÄISCHE PATENTANMELDUNG

(11) **EP 3 960 354 A1**
(43) Veröffentlichungstag der Anmeldung: **02.03.2022**
(21) Anmeldenummer: 20193674.7
(22) Anmeldetag: 31.08.2020
(51) Int. Cl.: B23K 9/12, B23K 9/167

(54) **VORRICHTUNG ZUR ZUFÜHRUNG EINES ABSCHMELZBAREN SCHWEISSDRAHTS ZUM TOOL CENTER POINT EINES SCHWEISSBRENNERS UND SCHWEISSBRENNER MIT EINER NICHTABSCHMELZBAREN ELEKTRODE MIT EINER SOLCHEN VORRICHTUNG**

(71) Anmelder: FRONIUS INTERNATIONAL GmbH, 4643 Pettenbach (AT)
(72) Erfinder: SPIESBERGER, Alfred, 4643 Pettenbach (AT)
(74) Vertreter: SONN Patentanwälte OG

(57) **Zusammenfassung**

Vorrichtung (1) zur Zuführung eines abschmelzbaren Schweißdrahts (2) in Richtung Tool Center Point (TCP) eines Schweißbrenners (3), mit einer Befestigungseinrichtung (6) zur Befestigung am Schweißbrenner (3) oder einem damit verbundenen Element, und mit einem mit der Befestigungseinrichtung (6) verbundenen Basisträger (5) mit zumindest zwei Ablenkelementen (9, 9') zur Führung des Schweißdrahts (2) in Richtung Tool Center Point (TCP). Zur optimalen Zuführung des Schweißdrahts (2) sind die zumindest zwei Ablenkelemente (9, 9') derart am Basisträger (5) angeordnet, dass eine erste Bahnlänge (l₁) des Schweißdrahts (2) von dem dem Tool Center Point (TCP) am nächsten gelegenen letzten Ablenkelement (9') zum Tool Center Point (TCP) kürzer ist, als eine zweite Bahnlänge (l₂) des Schweißdrahts (2) zwischen dem letzten Ablenkelement (9') und einem entgegen einer Hauptförderrichtung (F) des Schweißdrahts (2) gesehenen weiteren Ablenkelement (9), und, dass der Schweißdraht (2) entlang der zweiten Bahnlänge (l₂) eine größere Segmenthöhe (h₂) aufweist, als entlang der ersten Bahnlänge (l₁).

## Beschreibung

Die Erfindung betrifft eine Vorrichtung zur Zuführung eines abschmelzbaren Schweißdrahts in Richtung Tool Center Point (TCP) eines Schweißbrenners, insbesondere eines WIG-Schweißbrenners, mit einer Befestigungseinrichtung zur Befestigung am Schweißbrenner oder einem damit verbundenen Element, und mit einem mit der Befestigungseinrichtung verbundenen Basisträger mit zumindest zwei Ablenkelementen zur Führung des Schweißdrahts in Richtung Tool Center Point (TCP).

Weiters betrifft die Erfindung einen Schweißbrenner, insbesondere WIG-Schweißbrenner, mit einem Brennerkörper und zumindest einer Zuführvorrichtung für einen abschmelzbaren Schweißdraht.

Unter die vorliegende Erfindung fallen Vorrichtungen zur Zuführung abschmelzbarer Schweißdrähte, welche an verschiedenen Schweißbrennern befestigt werden können, nämlich an Schweißbrennern mit nichtabschmelzbarer Elektrode, wobei der Lichtbogen zwischen der temperaturbeständigen, nichtabschmelzbaren Elektrode und einem zu bearbeitenden Werkstück brennt, oder auch an Laser-Schweißbrennern, bei welchen der abschmelzbare Schweißdraht mit Hilfe eines Laserstrahls aufgeschmolzen wird, oder kombinierten Schweißbrennern, sogenannten Hybridschweißbrennern, Plasmabrennern oder Autogen-Schweißbrennern; also an Schweißbrennern für das Schmelzschweißen bei dem der Hauptanteil der Schweißenergie der Schweißstelle im Wesentlichen unabhängig vom Schweißdraht zugeführt wird. Der Werkstoff zum Ausfüllen eines Spalts zwischen zwei Werkstücken oder zum Auftragen auf die Oberfläche des Werkstücks beim Auftragsschweißen (sogenannten Cladding) wird über zumindest einen drahtförmigen Schweißdraht aus abschmelzbarem Material zugeführt, der in den Lichtbogen und bzw. oder Laserstrahl, einer Plasmasäule oder Flamme eingebracht wird, wo eine Erwärmung und Verflüssigung des Schweißdrahts stattfindet. Der zumindest eine abschmelzbare Schweißdraht und die Mittelachse des Schweißbrenners (beispielsweise die Längsachse der nichtabschmelzbaren Elektrode oder die Längsachse des Lasers) schneiden einander im sogenannten Tool Center Point (TCP). Bei den Schweißverfahren mit nichtabschmelzbarer Elektrode ist das WIG (Wolfram-Inertgas)-Schweißverfahren mit zumindest einer Wolfram-Elektrode am häufigsten. Schweißverfahren mit nichtabschmelzbarer Elektrode werden beispielsweise für die Verarbeitung von Nichteisenmetallen (z.B. Aluminium, Kupfer und Messing) oder rostfreien Stählen verwendet, wobei eine besonders hohe Qualität der Schweißnaht resultiert.

Beispielsweise beschreibt die EP 3 017 901 B1 einen WIG-Schweißbrenner mit einem besonders kompakten Brennerkopf, der sich insbesondere für das Auftragsschweißen im Inneren von Rohren eignet. Die Zuführung des Zusatzmaterials in Form zumindest eines abschmelzbaren Schweißdrahts zum TCP erfolgt hier über Rohre, welche bis zu einem gewissen Grad verstellt werden können. Der Brennerkopf mit der nichtabschmelzbaren Elektrode kann bei gleichbleibendem TCP über einen gewissen Winkelbereich verschwenkt werden. Aufgrund der Rohre erfährt der Schweißdraht während der Zuführung eine relativ hohe Reibung.

Die Zuführung des abschmelzbaren Schweißdrahts bei bekannten Schweißbrennern weist meist relativ große Bauweise auf und verursacht relativ hohe Reibung bei der Drahtförderung. Eine Einstellung des Zuführwinkels, also des Winkels zwischen der Längsrichtung des abschmelzbaren Schweißdrahts und der Mittelachse des Schweißbrenners ist, falls überhaupt, für den Anwender nur sehr schwer möglich.

Zur Reduktion der Reibung der Drahtförderung existieren auch Zuführvorrichtungen mit Rollen, wie beispielsweise in der JP H11-342471 A beschrieben. Nachteilig an dieser Zuführvorrichtung ist jedoch der relativ große, erforderliche Bauraum, der letztlich den zugeführten Schweißdraht während des Schweißvorgangs um seine statische Ruhelage schwingen lässt und so zu einem instabilen Schweißprozess führen kann.

Die Aufgabe der vorliegenden Erfindung besteht daher in der Schaffung einer oben genannten Vorrichtung zur Zuführung eines abschmelzbaren Schweißdrahts in Richtung Tool Center Point (TCP) eines Schweißbrenners, sowie eines Schweißbrenners mit einer solchen Zuführvorrichtung, wobei die Zuführung des Schweißdrahts möglichst platzsparend und reibungslos erfolgen soll. Nachteile bekannter Systeme sollen vermieden oder zumindest reduziert werden.

Gelöst wird die erfindungsgemäße Aufgabe durch eine oben genannte Zuführvorrichtung für den abschmelzbaren Schweißdraht, wobei die zumindest zwei Ablenkelemente derart am Basisträger angeordnet sind, dass eine erste Bahnlänge des Schweißdrahts von dem dem Tool Center Point (TCP) am nächsten gelegenen letzten Ablenkelement zum Tool Center Point (TCP) kürzer ist, als eine zweite Bahnlänge des Schweißdrahts zwischen dem letzten Ablenkelement und einem entgegen einer Hauptförderrichtung des Schweißdrahts gesehenen weiteren Ablenkelement, und dass die zumindest zwei Ablenkelemente weiters derart am Basisträger angeordnet sind, dass der Schweißdraht entlang der zweiten Bahnlänge eine größere Segmenthöhe aufweist, als entlang der ersten Bahnlänge. Durch die geometrischen Bedingungen für die zumindest zwei Ablenkelemente ist eine optimale und einfache Führung des Schweißdrahts möglich. Vorteilhaft an dieser Zuführvorrichtung ist außerdem der kleine Bauraum, der zusätzlich zur geometrischen Anordnung der Ablenkelemente dafür sorgt, dass der zugeführte Schweißdraht nicht um seine statische Ruhelage schwingt und zu einem stabileren Schweißprozess führt. Die Ablenkelemente können direkt am Basisträger angeordnet und mit diesem verbunden sein oder auch an einem mit dem Basisträger verbundenen Element, beispielsweise einem Rollenträger angeordnet und mit diesem Element verbunden sein. Unter den Begriff Ablenkelement fallen verschiedene Einrichtungen, welche eine Richtungsänderung des abschmelzbaren Schweißdrahts bewirken und zu diesem Zweck eine Kraft bzw. ein Dreh- oder Biegemoment auf den Schweißdraht ausüben. Solche Ablenkelemente können Kanten, Flächenbereiche, Stifte, Rollen oder dgl. sein, welche den zuzuführenden Schweißdraht berühren und dessen Förderrichtung beeinflussen. Auch können mehrere Ablenkelemente durch ein Element gebildet sein, an welchem der Schweißdraht zwei oder mehrmals berührt und abgelenkt wird. Lediglich Führungselemente, welche den Schweißdraht nicht oder ohne wesentliche Krafteinwirkung berühren, fallen nicht unter den Begriff der Ablenkelemente. Wesentlich ist, dass die erste Bahnlänge des Schweißdrahts vom letzten Ablenkelement zum TCP kürzer ist als die zweite Bahnlänge des Schweißdrahts vom letzten Ablenkelement zu einem entgegen der Hauptförderrichtung des Schweißdrahts gesehenen weiteren Ablenkelement. Darüber hinaus ist die Segmenthöhe des bogenförmig verlaufenden Schweißdrahts entlang der zweiten Bahnlänge größer als die Segmenthöhe des Schweißdrahts entlang der ersten Bahnlänge. Durch diese Bedingungen und die relativ geringe erste Bahnlänge, also die Länge, welche der Schweißdraht ungeführt bzw. frei vom letzten Ablenkelement zum TCP angeordnet ist, resultiert auch eine besonders exakte Zuführung des Schweißdrahts in Richtung TCP und eine geringe Neigung zu Schwingungen oder seitlichen Auslenkungen des Schweißdrahts. Die Reibung bei der Zuführung des Schweißdrahts kann durch die Verwendung geeigneter Ablenkelemente minimiert werden. Zusätzlich wird die Reibung durch die Anordnung eines Bewegungsfreiraums für den Schweißdraht, insbesondere an der Stelle der maximalen Segmenthöhe, reduziert, insbesondere bei der Verwendung von unterschiedlich dicken, bzw. aus unterschiedlichen Materialien bestehenden Schweißdrähten. Unter der Hauptförderrichtung des Schweißdrahts wird die Förderrichtung in Richtung TCP verstanden. Bei verschiedenen Schweißverfahren kann es zeitweise auch zu einer Förderung des Schweißdrahts vom TCP weg, also einer Rückwärtsbewegung, kommen. Im zeitlichen Mittel überwiegt jedoch immer die Förderung in Richtung TCP, also in Hauptförderrichtung, da das Material zum Zwecke der Bildung der Schweißnaht oder einer Auftragsschicht verbraucht werden muss. Die Zuführvorrichtung kann für bestimmte Anwendungen auch für die Zuführung mehrerer abschmelzender Schweißdrähte ausgebildet sein.

Wenn zumindest ein Ablenkelement, vorzugsweise das letzte Ablenkelement, in einer Richtung im Wesentlichen quer zum Basisträger verstellbar ist, kann eine Verstellung des abschmelzbaren Schweißdrahts relativ zum Schmelzbad, beispielsweise zum Ausgleich von Bauteil-Toleranzen bzw. zur Einstellung der optimalen Zuführung des Schweißdrahts in Richtung TCP für das Erreichen der angeforderten Schweißnahtqualität, stattfinden. Quer zum Basisträger bedeutet hier im Wesentlichen rechtwinkelig zur Ebene, in welcher der Schweißdraht mit der zweiten Bahnlänge verläuft. Die verstellbare Anordnung eines Ablenkelements schließt dafür geeignete technische Lösungen, wie verformbare Materialien ein. So könnte etwa ein biegeweicher Basisträger einfach verbogen werden, um das am Basisträger angeordnete Ablenkelement in die gewünschte Position zu bringen.

Wenn neben dem letzten Ablenkelement zumindest zwei Ablenkelemente vorgesehen sind, zwischen welchen der Schweißdraht führbar ist, kann eine besonders geeignete Zuführung des abschmelzenden Schweißdrahts in Richtung TCP erfolgen.

Um den Zuführwinkel des Schweißdrahts in Richtung TCP bei im Wesentlichen gleichbleibendem TCP verändern zu können ist die Position zumindest eines Ablenkelements relativ zum bzw. gegenüber dem Basisträger vorzugsweise veränderbar. Durch die Veränderung der Position des zumindest einen Ablenkelements wird die erste Bahnlänge des Schweißdrahts im Verhältnis zur zweiten Bahnlänge des Schweißdrahts verstellt, wie auch die Segmenthöhe sowie die Krümmung (also die Abweichung der Kurve des Schweißdrahts von einer Geraden) bzw. der Verlauf der Krümmung des Schweißdrahts verstellt. Um bei gegebenem Bauraum den Zuführwinkel des Schweißdrahts besonders gut beeinflussen zu können und dem Schweißdraht eine Mindestvorspannung zu geben, sodass dieser sicher entlang der Ablenkelemente geführt werden kann, beträgt die Segmenthöhe der zweiten Bahnlänge vorzugsweise mehr als 2mm. Eine Verstellung des Zuführwinkels kann für bestimmte Schweißprozesse vorteilhaft oder notwendig sein und zu einer Verbesserung der Schweißqualität beitragen. Die Verstellbarkeit der Position zumindest eines Ablenkelements relativ zum Basisträger kann durch verschiedene Konstruktionen stufenweise oder auch stufenlos erfolgen. Idealerweise ist der Zuführwinkel des Schweißdrahts zwischen 30° und 120°, vorzugsweise zwischen 40° und 70°, verstellbar. Durch einen derartigen Bereich des Zuführwinkels können alle möglichen Schweißaufgaben mit einer optimalen Position für den Schweißdraht in Bezug auf die nichtabschmelzbare Elektrode durchgeführt werden.

Beispielsweise kann die Position zumindest eines Ablenkelements dadurch verändert werden, dass unterschiedliche Basisträger mit jeweils zumindest zwei Ablenkelementen zur Erzielung unterschiedlicher Zuführwinkel vorgesehen sind, welche je nach Bedarf ausgewählt und montiert werden können. Beispielsweise können drei verschiedene Basisträger für drei verschiedene Zuführwinkel angefertigt und mit der Zuführvorrichtung mitgeliefert werden, sodass der Schweißer je nach Wunsch den entsprechenden Zuführwinkel des abschmelzbaren Schweißdrahts durch Austausch des entsprechenden Basisträgers der Zuführvorrichtung realisieren kann.

Alternativ dazu kann die Position zumindest eines Ablenkelements auch dadurch veränderbar sein, dass zumindest ein Ablenkelement auf einem Rollenträger angeordnet bzw. von einem Rollenträger getragen ist, welcher Rollenträger verstellbar am Basisträger angeordnet bzw. vom Basisträger getragen ist. Somit kann durch Verstellung des Rollenträgers mit dem zumindest einen Ablenkelement gegenüber dem Basisträger eine Veränderung des Zuführwinkels und eine Regulierung der Segmenthöhe des abschmelzbaren Schweißdrahts erzielt werden.

Bei der oben genannten Ausführungsform kann der Rollenträger entlang einer bogenförmigen Kulissenbahn stufenlos relativ zum Basisträger verstellbar sein. Dabei wird der Rollenträger in der gewünschten Position für einen bestimmten Zuführwinkel fixiert. Die Fixierung erfolgt vorzugsweise durch entsprechende einfach schließbare und öffenbare Schnellverschlüsse oder dgl.

Für eine stufige Verstellung des Zuführwinkels des Schweißdrahts zum TCP kann der Rollenträger auch in mehreren unterschiedlichen Positionen mit dem Basisträger verbindbar sein. Beispielsweise können für einige Zuführwinkel verschiedene Löcher am Basisträger angeordnet sein, in welche der Rollenträger angeordnet werden kann.

Alternativ dazu können verschieden ausgebildete Rollenträger vorgefertigt und zur Erzielung unterschiedlicher Zuführwinkel mit dem Basisträger verbunden werden.

Gemäß einem weiteren Merkmal der Erfindung kann das letzte Ablenkelement auf einem mit dem Basisträger vorzugsweise verstellbar verbundenen Stiftträger angeordnet sein. Der Stiftträger gemeinsam mit dem letzten Ablenkelement kann durch entsprechende Stellschrauben oder dgl. verstellbar angeordnet sein, beispielsweise um Toleranzen ausgleichen zu können.

Vorteilhafter Weise ist die Position zumindest eines Ablenkelements dadurch veränderbar, dass die am Rollenträger angeordneten Ablenkelemente und das am Stiftträger angeordnete letzte Ablenkelement miteinander gekoppelt gegenüber dem Basisträger verstellbar angeordnet sind. Für die Erzielbarkeit einer stufenlosen Verstellung des Zuführwinkels des Schweißdrahts zum TCP können die Ablenkelemente zueinander beweglich, bzw. kinematisch gekoppelt verstellbar angeordnet sein. Dadurch kann durch eine einzige Verstellung, welche beispielsweise mit entsprechenden Stellschrauben manuell oder durch entsprechende Antriebsmotoren auch elektrisch geschehen kann, die Position der zumindest zwei Ablenkelemente gleichzeitig vorgenommen werden, um den Zuführwinkel des Schweißdrahts in Richtung TCP bei im Wesentlichen gleichbleibendem TCP zu verändern.

Das zumindest eine Ablenkelement, insbesondere das letzte Ablenkelement, kann durch zumindest einen vorzugsweise drehbar gelagerten Gleitstift gebildet sein. Dies stellt eine geeignete und besonders reibungsarme Fördermöglichkeit des Schweißdrahts dar. Durch eine drehbare Lagerung des Gleitstifts wird eine minimale Reibung erzielt. Aufgrund der beim Schweißen üblichen hohen Temperaturen und der Nähe des Gleitstifts zum TCP müsste das Lager aber diesen hohen Temperaturen standhalten. Da die zweite Bahnlänge vergleichsweise groß ist, wird das letzte Ablenkelement jedoch mit einer vergleichsweise kleinen Anpresskraft des Schweißdrahtes beaufschlagt, was eine drehbare Lagerung des Gleitstifts nicht zwingend erfordert.

Weiters kann zumindest ein Ablenkelement durch zumindest eine Rolle gebildet sein. Zur Erzielung einer besonders kleinen Reibung bei der Förderung des Schweißdrahts ist es vorteilhaft, wenn jenes der Ablenkelemente, an dem betriebsmäßig das größte Biegemoment im Schweißdraht auftritt, als drehbare Rolle ausgeführt ist und die zweite Bahnlänge durch diese Rolle begrenzt wird. Auch das Lager der Rollen sollte temperaturbeständig ausgebildet sein, um den hohen beim Schweißen auftretenden Temperaturen standhalten zu können.

Wenn zumindest ein Gleitstift eine Nut für den Schweißdraht und bzw. oder zumindest eine Rolle eine Nut für den Schweißdraht aufweist, kann eine verbesserte Führung des abschmelzbaren Schweißdrahts erzielt werden. Die Nut kann beispielsweise einen V-förmigen oder U-förmigen Querschnitt aufweisen, sodass der Schweißdraht nur an besonders kleinen Flächen bzw. Punkten auf dem jeweiligen Ablenkelement aufliegt.

Wenn die Befestigungseinrichtung zur lösbaren und vorzugsweise drehbaren Verbindung mit dem Schweißbrenner oder einem damit verbundenen Element ausgebildet ist, kann eine besonders flexible Anordnung der Zuführvorrichtung in Bezug auf den Schweißbrenner und eine optimale Anpassung an die jeweilige Schweißaufgabe erfolgen.

Gelöst wird die erfindungsgemäße Aufgabe auch durch einen oben genannten Schweißbrenner, insbesondere einen WIG-Schweißbrenner, welcher mit zumindest einer oben beschriebenen Zuführvorrichtung ausgestattet ist. Zu den dadurch erzielbaren Vorteilen wird auf die obige Beschreibung der Zuführvorrichtung verwiesen.

Die vorliegende Erfindung wird anhand der beigefügten Figuren näher erläutert. Darin zeigen:
- Fig. 1: ein Ausführungsbeispiel einer an einem Schweißbrenner befestigten Zuführvorrichtung bei einem spitzen Zuführwinkel;
- Fig. 2: die Zuführvorrichtung gemäß Fig. 1 bei entsprechend verstellten Ablenkelementen zur Erzielung eines größeren Zuführwinkels;
- Fig. 3: ein anderes Ausführungsbeispiel einer an einem Schweißbrenner befestigte Zuführvorrichtung mit verstellbaren Ablenkelementen;
- Fig. 4: eine andere Ansicht auf das Ausführungsbeispiel einer Zuführvorrichtung gemäß Fig. 3;
- Fig. 5: ein weiteres Ausführungsbeispiel einer Zuführvorrichtung mit verstellbaren Ablenkelementen bei einem spitzen Zuführwinkel;
- Fig. 6: eine andere Ansicht auf die Zuführvorrichtung gemäß Fig. 5;
- Fig. 7: die Zuführvorrichtung gemäß Fig. 5 bei verstellten Ablenkelementen zur Erzielung eines stumpfen Zuführwinkels;
- Fig. 8: eine andere Ansicht auf die Zuführvorrichtung gemäß Fig. 7;
- Fig. 9A: eine Ansicht auf die an einem Schweißbrenner befestigte Zuführvorrichtung gemäß Fig. 7 und 8 von vorne; und
- Fig. 9B: eine Ansicht auf die an einem Schweißbrenner befestigte Zuführvorrichtung gemäß Fig. 7 und 8 von vorne bei gegenüber Fig. 9A verdreht angeordneter Zuführvorrichtung.

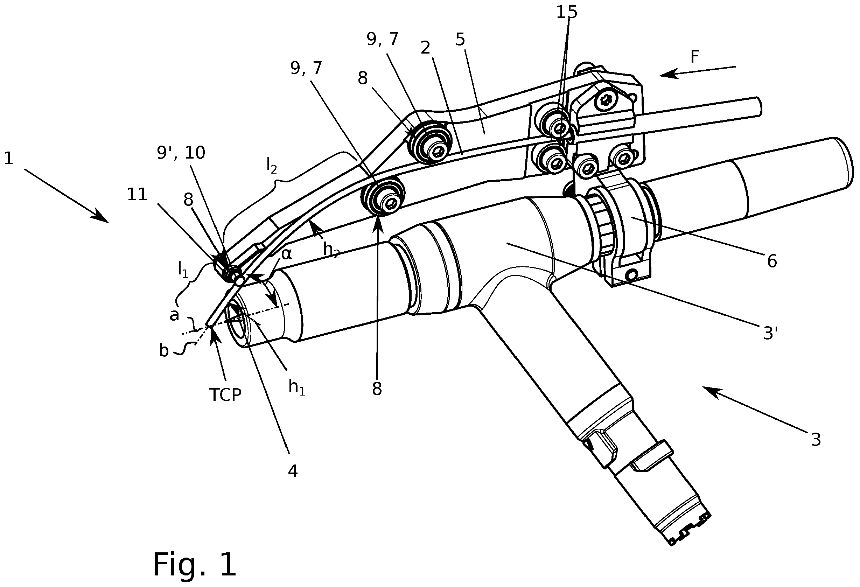

Fig. 1 zeigt ein einfaches Ausführungsbeispiel einer an einem Schweißbrenner 3 befestigten Vorrichtung 1 zur Zuführung eines abschmelzbaren Schweißdrahts 2 in Richtung Tool Center Point TCP. Der TCP kann Teil einer Abschmelzzone des Schweißbrenners 3 sein, wobei die Abschmelzzone jene Zone ist, welche den dieser Zone zugeführten Schweißdraht 2 bzw. dessen freies Ende in einem Abschmelzpunkt der Bahn für den Schweißdraht 2 betriebsmäßig abzuschmelzen vermag. In diesem Fall ist ein Zuführwinkel α des Schweißdrahts 2 zum TCP, das ist jener Winkel, den die Mittelachse a des Schweißbrenners 3, also im Falle eines Schweißbrenners 3 mit nichtabschmelzbarer Elektrode 4 die Längsachse der nichtabschmelzbaren Elektrode 4 mit der Längsrichtung b des abschmelzbaren Schweißdrahts 2 einschließt, bevorzugt ein spitzer Winkel. Der Zuführwinkel α kann je nach Anwendung bis zu 180° betragen. Die Längsrichtung b des abschmelzbaren Schweißdrahts 2 ist durch die Tangente an den Schweißdraht 2 im TCP bestimmt. Es handelt sich beim Schweißbrenner 3 insbesondere um einen WIG-Schweißbrenner mit einer Wolframelektrode als nichtabschmelzbare Elektrode 4. Es sind aber auch Laser-Schweißbrenner oder kombinierte Laser-Lichtbogen-Schweißbrenner sowie Plasmabrenner und Brenner mit einer Flamme denkbar (nicht dargestellt). Im Falle dass die Energie für einen Schweißprozess nicht von einem Lichtbogen sondern beispielsweise von einem Laser geliefert wird, ist der Zuführwinkel bzw. Anstellwinkel des Schweißdrahts als der im TCP bzw. Abschmelzpunkt auftretende Winkel zwischen dem Schweißdraht respektive einer Bahn für den Schweißdraht und der mittleren Ausrichtung des Energieflusses in der Abschmelzzone des Schweißbrenners zu verstehen.

Die Zuführvorrichtung 1 beinhaltet eine Befestigungseinrichtung 6 zur Befestigung am Schweißbrenner 3 oder einem damit verbundenen Element. Mit der Befestigungseinrichtung 6 ist ein Basisträger 5 mit zumindest zwei Ablenkelementen 9, 9' zur Führung des abschmelzbaren Schweißdrahts 2 verbunden. Im dargestellten Ausführungsbeispiel ist die Befestigungseinrichtung 6 durch eine den Schweißbrenner 3 umfassende Schelle gebildet, welche den Brennerkörper 3' umgibt. Am Basisträger 5 sind zwei Rollen 7 als Ablenkelemente 9 zur Führung des Schweißdrahts 2 und ein als Gleitstift 10 ausgebildetes letztes bzw. dem TCP nächstliegendes, Ablenkelement 9' angeordnet. Wie weiter unten erläutert, können die Ablenkelemente 9, 9' auch über weitere Elemente am Basisträger 5 indirekt und allenfalls verstellbar angeordnet sein. Der Gleitstift 10 kann ein Außengewinde aufweisen und dadurch im Wesentlichen senkrecht zu jener Ebene, in welcher der Schweißdraht 2 entlang der zweiten Bahnlänge l₂ liegt, verstellt werden, wodurch der Schweißdraht 2 exakt in der Abschmelzzone platziert werden kann. Darüber hinaus können weitere Rollen 15 oder Ablenkelemente zur Führung des Schweißdrahts 2 am Basisträger 5 angeordnet sein. Um die Reibung bei der Förderung des Schweißdrahts 2 möglichst gering zu halten, sind die Rollen 7, 15 und allenfalls der Gleitstift 10 drehbar gelagert. Zur Führung des Schweißdrahts 2 können die Rollen 7, 15 Nuten 8 aufweisen. Auch der Gleitstift 10 kann mit einer Nut 11 ausgebildet sein. Auch wenn zeitweise eine Bewegung des Schweißdrahts 2 vom TCP weg möglich ist, wird der Schweißdraht 2 während des Schweißverfahrens in der Regel in Richtung des Tool Center Points TCP gefördert und dort zur Bildung einer Schweißnaht zwischen zwei Werkstücken oder zur Bildung einer Beschichtung auf einem Werkstück (nicht dargestellt) aufgeschmolzen. Die Förderrichtung des Schweißdrahts 2 in Richtung Tool Center Point TCP wird als Hauptförderrichtung F bezeichnet.

Die durch die Rollen 7 gebildeten Ablenkelemente 9 und das durch den Gleitstift 10 gebildete letzte Ablenkelement 9' sind so am Basisträger 5 angeordnet, dass der Schweißdraht an drei Stellen derart abgelenkt wird, dass eine erste Bahnlänge l₁ des Schweißdrahts 2 von dem dem Tool Center Point TCP am nächsten gelegenen letzten Ablenkelement 9' zum Tool Center Point TCP kürzer ist als eine zweite Bahnlänge l₂ des Schweißdrahts 2 zwischen dem letzten Ablenkelement 9' und einem entgegen der Hauptförderrichtung F des Schweißdrahts 2 gesehenen weiteren Ablenkelement 9 ist. Durch eine entsprechende Anordnung der zumindest zwei Ablenkelemente 9, 9' am Basisträger 5 weist der Schweißdraht 2 entlang der zweiten Bahnlänge l₂ eine größere Segmenthöhe h₂ auf, als die Segmenthöhe h₁ der ersten Bahnlänge l₁. Der Schweißdraht 2 weist entlang der Bahnlänge l₂ im Wesentlichen stärkere oder gleich große Krümmung auf als entlang der Bahnlänge l₁.

Vorteilhafterweise ist der Zuführwinkel α des Schweißdrahts 2 in Richtung Tool Center Point TCP bei im Wesentlichen gleichbleibendem TCP verstellbar. Zu diesem Zweck können die Ablenkelemente 9, 9' in ihrer Position verstellbar am bzw. zum Basisträger 5 angeordnet sein. Beispielsweise kann die Position zumindest eines Ablenkelements 9, 9' dadurch verändert werden, dass unterschiedliche Basisträger 5 mit jeweils zumindest zwei Ablenkelementen 9, 9' zur Erzielung verschiedener Gruppen von Positionen der Ablenkelemente 9, 9' und damit unterschiedlicher Zuführwinkel α vorgesehen sind, welche je nach Bedarf ausgewählt und montiert werden können. Eine solche Verstellbarkeit der Ablenkelemente 9, 9' kann auch dadurch erreicht werden, dass beispielsweise verformbare Materialien als Ablenkelemente 9, 9' verwendet werden.

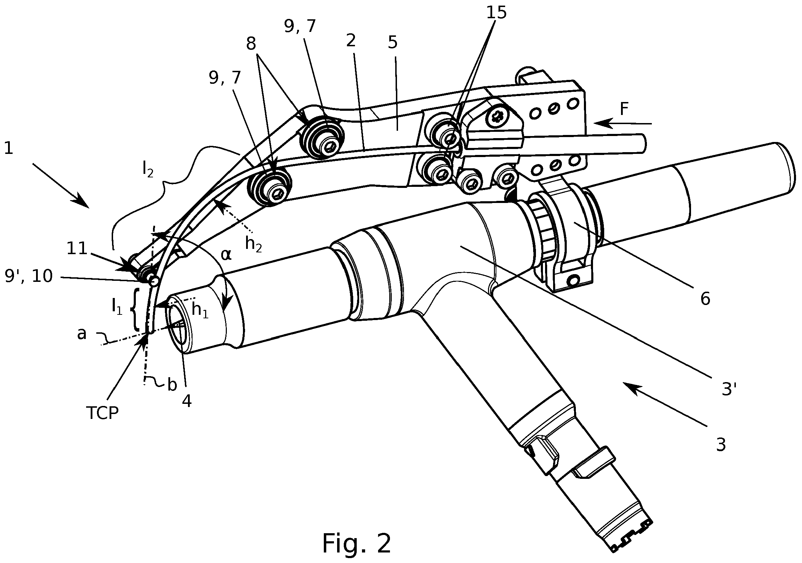

Fig. 2 zeigt die Zuführvorrichtung 1 gemäß Fig. 1 mit einem anderen Basisträger 5, durch welchen sich andere Positionen der Ablenkelemente 9, 9' und ein größerer Zuführwinkel α ergeben. Aufgrund der veränderten Positionen der Ablenkelemente 9, 9' verändern sich auch die Bahnlängen l₁, l₂ und die Segmenthöhen h₁, h₂ und der Zuführwinkel α, der TCP bleibt in diesem Fall aber im Wesentlichen erhalten.

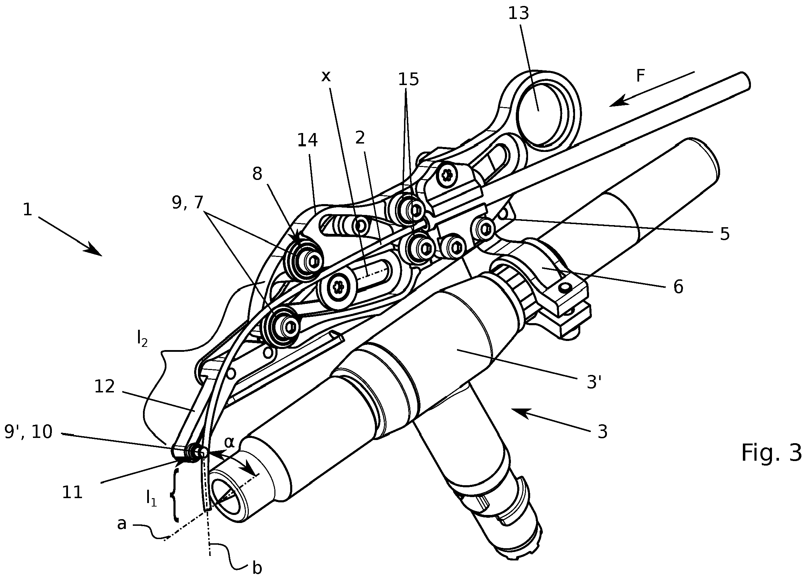

Fig. 3 zeigt ein anderes Ausführungsbeispiel einer an einem Schweißbrenner 3 befestigten Zuführvorrichtung 1 mit verstellbar angeordneten Ablenkelementen 9, 9'. Dabei sind die zwei als Rollen 7 ausgebildeten Ablenkelemente 9 auf einem Rollenträger 14 befestigt, der verstellbar gegenüber dem Basisträger 5 angeordnet ist, wodurch verschiedene Zuführwinkel α des Schweißdrahts 2 erzielt werden können. Der Rollenträger 14 ist entlang einer bogenförmigen Kulissenbahn x stufenlos gegenüber dem Basisträger 5 verstellbar. Die Verstellung des Zuführwinkel α kann in einer besonders einfachen und raschen Weise über ein entsprechendes Betätigungselement 13 erfolgen, wodurch der Rollenträger 14 mit den Rollen 7 und allenfalls weiteren Rollen 15 entlang der bogenförmigen Kulissenbahn x gegenüber dem Basisträger 5 bewegt wird. Das letzte Ablenkelement 9' ist an einem Stiftträger 12 befestigt, der mit dem Basisträger 5 entsprechend verbunden ist. Bei Bewegung des Rollenträgers 14 gegenüber dem Basisträger 5 entlang der bogenförmigen Kulissenbahn x ergibt sich eine Veränderung des Zuführwinkels α des abschmelzbaren Schweißdrahts 2 in Richtung TCP ohne wesentliche Veränderung des TCP. Es werden also die erste Bahnlänge l₁ und die zweite Bahnlänge l₂ und die erste Segmenthöhe h₁ und die zweite Segmenthöhe h₂ entsprechend verändert, sodass sich der Zuführwinkel α ändert. Über entsprechende Schrauben oder dgl. kann der Rollenträger 14 in der gewünschten Position am Basisträger 5 fixiert werden.

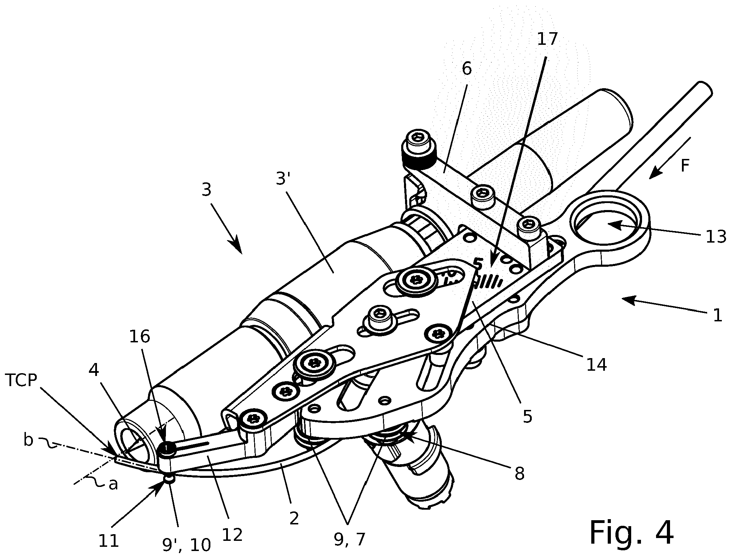

Fig. 4 zeigt eine andere Ansicht auf die Zuführvorrichtung 1 gemäß Fig. 3. Dabei sind Markierungen 17 am Basisträger 5 sichtbar, welche die entsprechende Verstellung des Rollenträgers 14 gegenüber dem Basisträger 5 für einen gewünschten Zuführwinkel α anzeigen.

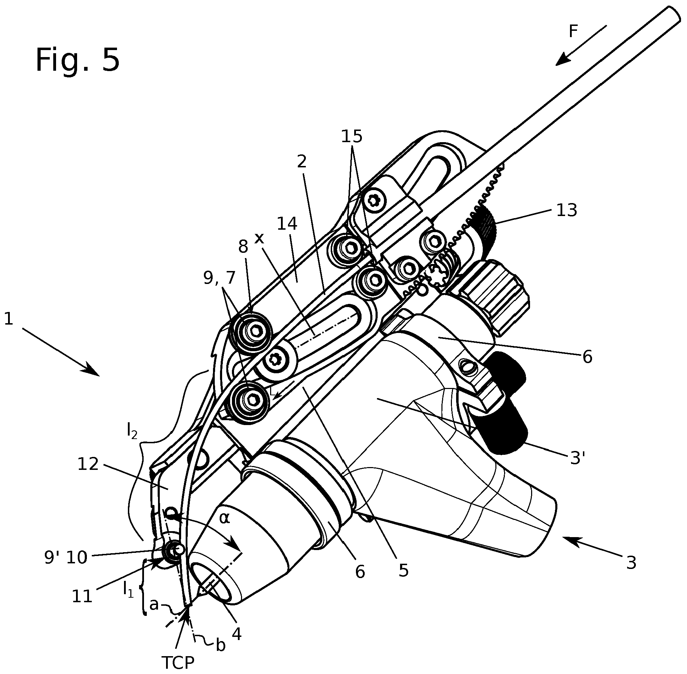

Fig. 5 zeigt ein weiteres Ausführungsbeispiel einer an einem Schweißbrenner 3 befestigten Vorrichtung 1 zur Zuführung eines abschmelzbaren Schweißdrahts 2 in Richtung Tool Center Point TCP. In diesem Fall ist der Zuführwinkel α des Schweißdrahts 2 ein spitzer Winkel. Zur einfachen und raschen Verstellung des Zuführwinkel α des Schweißdrahts 2 in Richtung Tool Center Point TCP bei im Wesentlichen gleichbleibendem TCP sind die als Rollen 7, ausgebildeten Ablenkelemente 9 an einem Rollenträger 14 angeordnet, welcher verstellbar mit dem Basisträger 5 verbunden ist. Auch das letzte als Gleitstift 10 ausgebildete Ablenkelement 9' am Stiftträger 12 ist beweglich gekoppelt mit dem Rollenträger 14 verbunden. Der Rollenträger 14 ist entlang einer bogenförmigen Kulissenbahn x stufenlos gegenüber dem Basisträger 5 verstellbar. Die Verstellung des Zuführwinkel α kann in einer besonders einfachen und raschen Weise über ein entsprechendes Betätigungselement 13 erfolgen, wodurch der Rollenträger 14 mit den Rollen 7 und allenfalls weiteren Rollen 15 entlang der bogenförmigen Kulissenbahn x gegenüber dem Basisträger 5 bewegt wird. Auch die Bewegung des letzten Ablenkelements 9' erfolgt in gekoppelter Weise mit der Bewegung des Rollenträgers 14. Dadurch werden die Positionen der Ablenkelemente 9, 9' entsprechend verändert, sodass sich der Zuführwinkel α ändert.

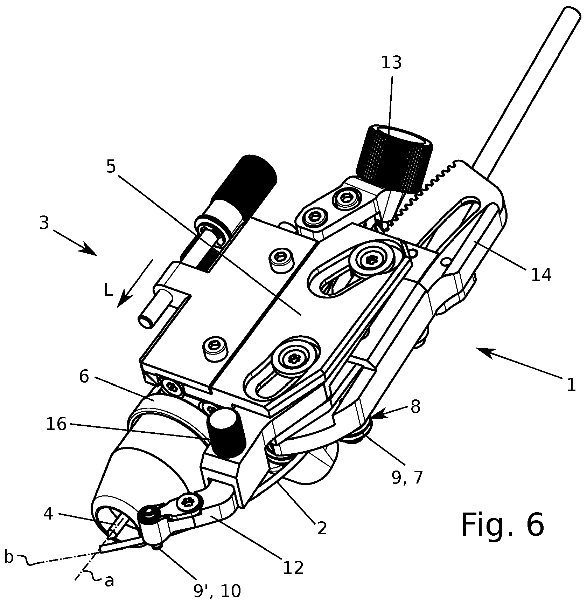

Fig. 6 zeigt eine andere Ansicht auf die an einem Schweißbrenner 3 befestigte Zuführvorrichtung 1 für den Schweißdraht 2 gemäß Fig. 5 bei einem spitzen Zuführwinkel α**.** Über ein Betätigungselement 16 kann das letzte Ablenkelement 9' im Wesentlichen quer zum Basisträger 5, d.h. rechtwinkelig zu jener Ebene, in welcher der Schweißdraht 2 entlang der zweiten Bahnlänge l₂ liegt, verstellt werden. Der Basisträger 5 kann auch in Längsrichtung L des Schweißbrenners 3 verstellbar angeordnet sein.

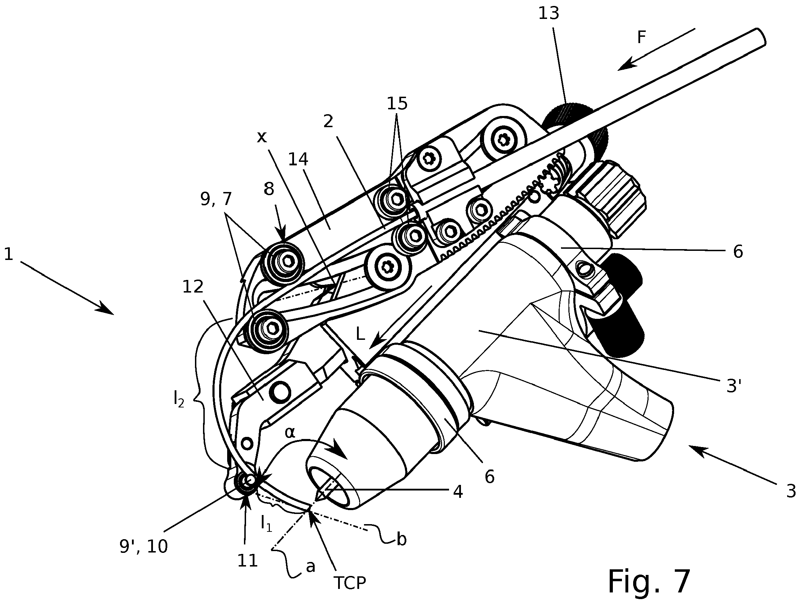

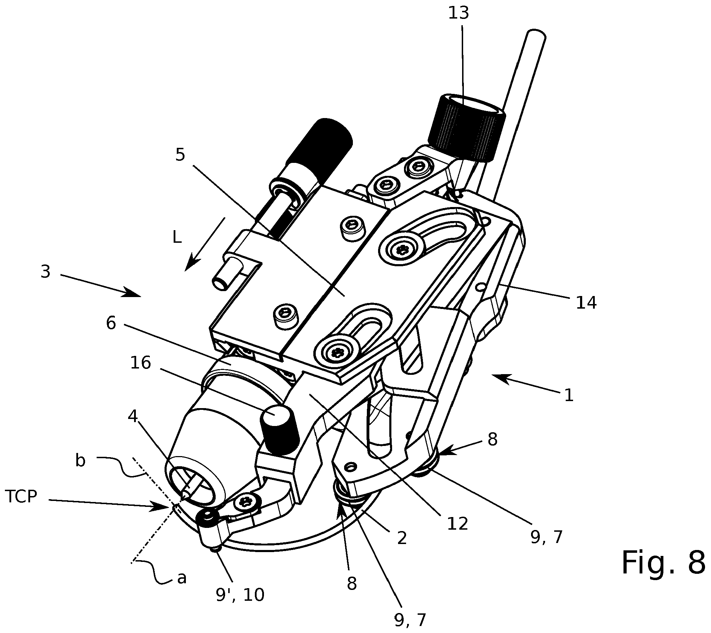

Fig. 7 und 8 zeigen die Zuführvorrichtung 1 gemäß den Fig. 5 und 6 bei entsprechend verstellten Ablenkelementen 9, 9' zur Erzielung eines stumpfen Zuführwinkels α**.**

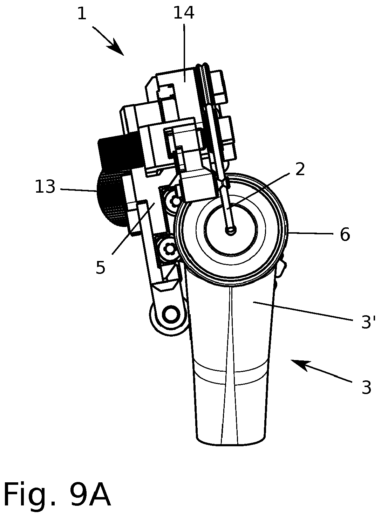

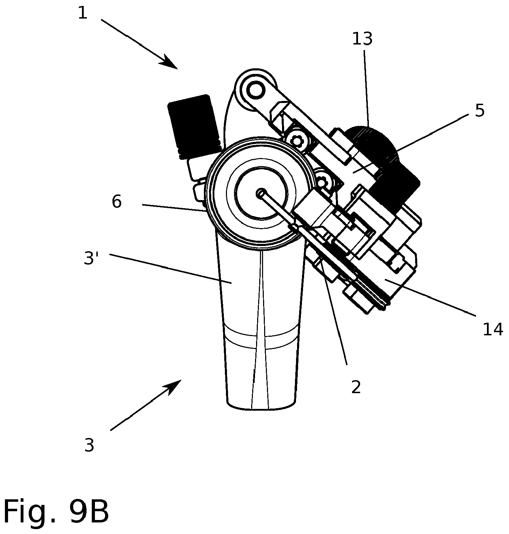

Fig. 9A zeigt eine Ansicht auf einen Schweißbrenner 3 mit der Zuführvorrichtung 1 von vorne. Dabei ist die Befestigungseinrichtung 6 zur drehbaren Verbindung mit dem Schweißbrenner 3 ausgebildet. Dadurch kann entsprechend der gewünschten Schweißaufgabe die Zuführvorrichtung 1 in einer für den Schweißer geeigneten Position am Schweißbrenner 3 bzw. Brennerkörper 3' befestigt werden. Figur 9B zeigt eine Ansicht auf den Schweißbrenner 3 mit der Zuführvorrichtung 1 von vorne in einer gegenüber Fig. 9A verdrehten Position.

Für die Ausführungsformen gemäß der vorangegangenen Figuren 3 bis 9B gilt, dass der Rollenträger 14 und der Stiftträger 12 gekoppelt verstellbar sind und dies durch Landlöcher und Zapfen geschieht. Rollenträger 14 und Stiftträger 12 sind verschiebbar angeordnet und verstellbar ausgeführt, sodass die Ablenkelemente 9 und 9' durch ein Steuerelement kinematisch gekoppelt sind. Das Steuerelement kann beispielsweise als ein sich der bogenförmigen Kulissenbahn x entlang bewegender Zapfen oder auch als Gelenkstange ausgeführt sein.

Zusammenfassend gilt, dass sowohl das Ablenkelement 9, als auch das letzte Ablenkelement 9' zumindest einen sogenannten Stützpunkt aufweist. Wenn das Ablenkelement 9 eine Nut, mit beispielsweise V-förmigem oder U-förmigem Querschnitt, aufweist, ergeben sich zwei und mehr Stützpunkte pro Ablenkelement 9 - funktional allerdings als ein Stützpunkt zu betrachten. In einem Stützpunkt berührt der Schweißdraht 2 betriebsmäßig ein Ablenkelement. Beim (funktionalen) Stützpunkt von Ablenkelement 9 oder von einem der Ablenkelemente 9 tritt betriebsmäßig das größte Biegemoment im Schweißdraht 2 auf. Ein Stützpunkt ist also im Wesentlichen als Berührpunkt von Schweißdraht 2 und Ablenkelement 9, 9' zu verstehen, aufgrund dessen in vorteilhafter Weise geringe Förderkräfte resultieren, mit welchen der Schweißdraht 2 in die Abschmelzzone gebogen wird. Abhängig seiner Eigenschaften, wie beispielsweise Dicke, Material, bzw. seiner Vorbiegung kann der Schweißdraht 2 von unterschiedlich vielen Stützpunkten eines Ablenkelements 9,9' geführt sein. Eine Bahnlänge l₁, bzw. l₂ ist jener Teil, entlang der Schweißdraht 2 in Hauptförderrichtung F bewegt wird und ist im Falle von Bahnlänge l₁ durch Tool Center Point TCP und dem dem TCP am nächsten gelegenen letzten Stützpunkt des letzten Ablenkelements 9' begrenzt, bzw. im Falle der Bahnlänge l₂ durch den letzten Stützpunkt und den Stützpunkt des entgegen der Hauptförderrichtung F betrachteten weiteren bzw. dahinterliegenden Ablenkelements 9, vorteilhafterweise durch jenen der Stützpunkte, an dem betriebsmäßig das Größte Biegemoment im Schweißdraht 2 auftritt, begrenzt. Die Bahnlängen l₁ und l₂ sind also als Teile einer Bahn, entlang welcher der Schweißdraht 2 betriebsmäßig gefördert wird, zu verstehen, wobei die Bahn im Wesentlichen als Kurve zu verstehen ist. Die Länge einer Bahnlänge ist somit als Kurvenlänge zu verstehen. Je nach Anordnung der Ablenkelemente 9, 9' ergibt sich eine entsprechend frei gestaltbare Form der Bahn. Betreffend die Segmenthöhen h₁ und h₂ und in Analogie zu einem Kreisbogen ist die Segmenthöhe als größter Normalabstand zwischen der geraden Linie, die durch die beiden Endpunkte der Bahnlänge geht, und einem Punkt auf der Bahnlänge zu verstehen, wobei sich die Bahnlänge, als Kurve gesehen, mit den Mittelpunkten der Querschnitte des Schweißdrahts 2 praktisch deckt. Die Segmenthöhe ist als die größte Ausbauchung einer Bahnlänge zu sehen, wobei die größte Ausbauchung der Bahnlänge l₂ in der Praxis in einem Bereich größer 2mm, insbesondere zwischen 2mm und 60mm liegt. In weiterer Folge stellt ein Raum um die Stelle mit der größten Ausbauchung der Bahnlänge l₂ einen Bewegungsfreiraum für den Schweißdraht 2 dar. Da im Allgemeinen mit der Anzahl der Stützpunkte die erforderliche Förderkraft für den Schweißdraht 2 steigt, ist es besonders vorteilhaft an der Bahnlänge l2 einen solchen Bewegungsfreiraum für den Schweißdraht anzuordnen, sodass sich der Schweißdraht 2 innerhalb dieses Bewegungsfreiraumes je nach Bedarf einmal mehr oder ein anderes Mal weniger ausbauchen kann. Es ist vorteilhaft, wenn der Bewegungsfreiraum an der Stelle der maximalen Ausbauchung der zweiten Bahnlänge l₂ angeordnet ist und wenn sich der Bewegungsfreiraum im Wesentlichen in Richtung und Gegenrichtung der maximalen Ausbauchung der zweiten Bahnlänge l₂ erstreckt und in Summe mehr als 3mm, insbesondere mehr als 5mm, beträgt. Ein solcher Bewegungsfreiraum für den Schweißdraht kann auch dann gegeben sein, wenn der Schweißdraht das Biegeelement etwa in einem federnden oder verschiebbaren Stützpunkt berührt.

Der Tool Center Point TCP liegt vorzugsweise im Bereich der Abschmelzzone des Schweißbrenners. Diese Abschmelzzone ist jener Bereich des Schweißbrenners, der den zugeführten Schweißdraht abzuschmelzen vermag.

Die vorliegende Erfindung zeigt eine Zuführvorrichtung 1 zur Zuführung eines abschmelzbaren Schweißdrahts 2 in Richtung Tool Center Point TCP eines Schweißbrenners 3, insbesondere eines WIG-Schweißbrenners, welche eine optimale und reibungsfreie Zuführung zulässt.

## Patentansprüche

1. Vorrichtung (1) zur Zuführung eines abschmelzbaren Schweißdrahts (2) in Richtung Tool Center Point (TCP) eines Schweißbrenners (3), insbesondere eines WIG-Schweißbrenners, mit einer Befestigungseinrichtung (6) zur Befestigung am Schweißbrenner (3) oder einem damit verbundenen Element, und mit einem mit der Befestigungseinrichtung (6) verbundenen Basisträger (5) mit zumindest zwei Ablenkelementen (9, 9') zur Führung des Schweißdrahts (2) in Richtung Tool Center Point (TCP), **dadurch gekennzeichnet, dass** die zumindest zwei Ablenkelemente (9, 9') derart am Basisträger (5) angeordnet sind, dass eine erste Bahnlänge (l₁) des Schweißdrahts (2) von dem dem Tool Center Point (TCP) am nächsten gelegenen letzten Ablenkelement (9') zum Tool Center Point (TCP) kürzer ist, als eine zweite Bahnlänge (l₂) des Schweißdrahts (2) zwischen dem letzten Ablenkelement (9') und einem entgegen einer Hauptförderrichtung (F) des Schweißdrahts (2) gesehenen weiteren Ablenkelement (9), und dass die zumindest zwei Ablenkelemente (9, 9') weiters derart am Basisträger (5) angeordnet sind, dass der Schweißdraht (2) entlang der zweiten Bahnlänge (l₂) eine größere Segmenthöhe (h₂) aufweist, als entlang der ersten Bahnlänge (l₁).

2. Zuführvorrichtung (1) nach Anspruch 1, **dadurch gekennzeichnet, dass** zumindest ein Ablenkelement (9, 9'), vorzugsweise das letzte Ablenkelement (9') in einer Richtung im Wesentlichen quer zum Basisträger (5) verstellbar ist.

3. Zuführvorrichtung (1) nach Anspruch 1 oder 2, **dadurch gekennzeichnet, dass** neben dem letzten Ablenkelement (9') zumindest zwei Ablenkelemente (9) vorgesehen sind, zwischen welchen der Schweißdraht (2) führbar ist.

4. Zuführvorrichtung (1) nach einem der Ansprüche 1 bis 3, **dadurch gekennzeichnet, dass** die Position zumindest eines Ablenkelements (9, 9') relativ zum Basisträger (5) veränderbar ist, sodass der Zuführwinkel (α) des Schweißdrahts (2) in Richtung Tool Center Point (TCP) bei im Wesentlichen gleichbleibendem Tool Center Point (TCP) veränderbar ist.

5. Zuführvorrichtung (1) nach Anspruch 4, **dadurch gekennzeichnet, dass** die Position zumindest eines Ablenkelements (9, 9') dadurch veränderbar ist, dass unterschiedliche Basisträger (5) mit jeweils zumindest zwei Ablenkelementen (9, 9') zur Erzielung unterschiedlicher Zuführwinkel (α) vorgesehen sind.

6. Zuführvorrichtung (1) nach Anspruch 4 oder 5, **dadurch gekennzeichnet, dass** die Position zumindest eines Ablenkelements (9, 9') dadurch veränderbar ist, dass zumindest ein Ablenkelement (9) auf einem Rollenträger (14) angeordnet ist, welcher Rollenträger (14) verstellbar am Basisträger (5) angeordnet ist.

7. Zuführvorrichtung (1) nach Anspruch 6, **dadurch gekennzeichnet, dass** der Rollenträger (14) entlang einer bogenförmigen Kulissenbahn (x) stufenlos relativ zum Basisträger (5) verstellbar ist.

8. Zuführvorrichtung (1) nach Anspruch 6, **dadurch gekennzeichnet, dass** der Rollenträger (14) in mehreren unterschiedlichen Positionen mit dem Basisträger (5) verbindbar ist.

9. Zuführvorrichtung (1) nach einem der Ansprüche 1 bis 8, **dadurch gekennzeichnet, dass** das letzte Ablenkelement (9') auf einem mit dem Basisträger (5) vorzugsweise verstellbar verbundenen Stiftträger (12) angeordnet ist.

10. Zuführvorrichtung (1) nach Anspruch 9, **dadurch gekennzeichnet, dass** die Position zumindest eines Ablenkelements (9, 9') dadurch veränderbar ist, dass die am Rollenträger (14) angeordneten Ablenkelemente (9) und das am Stiftträger (12) angeordnete letzte Ablenkelement (9') miteinander gekoppelt gegenüber dem Basisträger (5) verstellbar angeordnet sind.

11. Zuführvorrichtung (1) nach einem der Ansprüche 1 bis 10, **dadurch gekennzeichnet, dass** zumindest ein Ablenkelement (9), insbesondere das letzte Ablenkelement (9'), durch zumindest einen vorzugsweise drehbar gelagerten Gleitstift (10) gebildet ist.

12. Zuführvorrichtung (1) nach einem der Ansprüche 1 bis 11, **dadurch gekennzeichnet, dass** zumindest ein Ablenkelement (9) durch zumindest eine Rolle (7) gebildet ist.

13. Zuführvorrichtung (1) nach Anspruch 11 oder 12, **dadurch gekennzeichnet, dass** zumindest ein Gleitstift (10) eine Nut (11) für den Schweißdraht (2) und bzw. oder zumindest eine Rolle (7) eine Nut (8) für den Schweißdraht (2) aufweist.

14. Zuführvorrichtung (1) nach einem der Ansprüche 1 bis 13, **dadurch gekennzeichnet, dass** die Befestigungseinrichtung (6) zur lösbaren und vorzugsweise drehbaren Verbindung mit dem Schweißbrenner (3) oder einem damit verbundenen Element ausgebildet ist.

15. Schweißbrenner (3), insbesondere WIG-Schweißbrenner, mit einem Brennerkörper (3') und zumindest einer Zuführvorrichtung (1) für einen abschmelzbaren Schweißdraht (2), **dadurch gekennzeichnet, dass** die zumindest eine Zuführvorrichtung (1) nach einem der Ansprüche 1 bis 14 ausgebildet ist.
